# EUROPEAN PATENT APPLICATION

(11) **EP 2 031 878 A2**
(43) Date of publication of application: **04.03.2009**
(21) Application number: 08161776.3
(22) Date of filing: 05.08.2008
(51) Int. Cl.: H04N 7/24

(54) **Method and apparatus for recording broadcast data and providing contents**

(30) Priority: 03.09.2007 KR 20070089079
(71) Applicant: Samsung Electronics Co., Ltd., Suwon-si, Gyeonggi-do 442-742 (KR)
(72) Inventor: Oh, Keum-yong, Yongin-si Gyeonggi-do (KR); Kim, Hue-yin, Seoul (KR)
(74) Representative: Rooney, John-Paul

(57) **Abstract**

A method and apparatus for recording broadcast data and providing content, in which the content is recorded based on a time at which the content is actually transmitted using interaction between a server (110) and a host device (120) is provided. The method includes receiving a request (418) for recording a particular program, registering program information (426) of the requested program in a content server (110), and performing recording of the program (456) upon detection of stream output notification information (452) for the registered program from the content server (110).

## Description

### BACKGROUND OF THE INVENTION

### 1. Field of the Invention

Methods and apparatuses consistent with the present invention relate to a Video On Demand (VOD) system, and more particularly, to recording broadcast data and providing content, in which the content is recorded based on a time at which the content is actually transmitted between a server and a host device.

### 2. Description of the Related Art

In general, data broadcasting is a service for providing not only an existing broadcasting program but also information associated with the broadcasting program, life information, Internet connection, electronic commercial trade, interactive entertainment, and the like using a broadcasting network such as terrestrial waves, satellites, or cables. At present, there are international data broadcasting standards such as an Open Cable Application Platform (OCAP), an Advanced Common Application Platform (ACAP), and a Multimedia Home Platform (MHP). Standards for OCAP, OCAP 1.0 Profile OC-SP-OCAP1.0-I16-050803, which will hereinafter be referred to as OCAP I16, and OC-SP-OCAP-DVR-I02-050524, which will hereinafter be referred to as OCAP I02, provide and support an Application Program Interface (API) for storing recorded data in a specific storage area.

Broadcast data is recorded using a Personal Video Recorder (PVR) system or a Digital Video Recorder (DVR) system.

Typically, in the DVR system, when a server transmits an Electronic Program Guide (EPG) or a program list regarding programs to be broadcasted, a host device applies for or reserves desired content based on the program list. The host device starts recording at a scheduled point in time, regardless of content that is actually transmitted from the server at that point in time.

As a result, in a related art reserved recording method, if a program broadcasting schedule is changed and a scheduled recording start time changes to a different start time, desired broadcasting cannot be recorded because it has been reserved based on time information. In particular, when a user desires to record a series, the user has to re-input recording data one by one if a broadcasting schedule of the series is changed.

Moreover, in the related art reserved recording method, only content registered in the server can be subject to reserved recording and the host device controls the recording process. As a result, the server has difficulty in recognizing user's information in detail.

### SUMMARY OF THE INVENTION

Exemplary embodiments of the present invention aim to overcome the above disadvantages and other disadvantages not described above. However, the present invention need not overcome the disadvantages described above, and an exemplary embodiment of the present invention may not overcome any of the problems described above.

According to the present invention there is provided a method, apparatus and computer-readable recording medium as set forth in the appended claims. Other features of the invention will be apparent from the dependent claims, and the description which follows.

The present invention provides a method and apparatus for recording broadcast data and providing content in which the content is reserved-recorded at a time at which the content is actually transmitted by synchronizing a point of time at which a stream is output from a content server with a recording start time of a host device.

According to one aspect of the present invention, there is provided a method of recording broadcast data. The method includes receiving a request for recording a particular program, registering program information of the requested program in a content server, and performing recording of the program upon detection of stream output notification information for the registered program from the content server.

According to another aspect of the present invention, there is provided a method of providing content by a server. The method includes receiving a request for recording a particular program from a host device, registering program information of the requested program and identification (ID) information of the host device, and transmitting the program and stream output notification information for the program to the host device if it is confirmed that the requested program is secured, irrespective of a recording time that is set in the host device.

According to another aspect of the present invention, there is provided an apparatus for recording content. The apparatus includes a user interface unit receiving an input user command, a recording module unit performing recording of the content, and a register module unit receiving a request for recording a particular program through the user interface unit, registering program information of the requested program in a server, and performing recording through the recording module upon recognition of a stream output notification signal from the server.

### BRIEF DESCRIPTION OF THE DRAWINGS

The above and other aspects of the present invention will become more apparent by describing in detail an exemplary embodiment thereof with reference to the attached drawings in which:
FIG. 1 illustrates an example of a Video On Demand (VOD) system according to an exemplary embodiment of the present invention;
FIG. 2 is a detailed block diagram of a host device illustrated in FIG. 1;
FIG. 3 is an overall conceptual diagram for implementing a method of recording broadcast data and providing content by a server to a host device according to an exemplary embodiment of the present invention; and
FIGS. 4A and 4B are flowcharts illustrating in detail a method of recording broadcast data and providing content by a server to a host device according to an exemplary embodiment of the present invention.

### DETAILED DESCRIPTION OF THE INVENTION

Hereinafter, an exemplary embodiment of the present invention will be described in detail with reference to the accompanying drawings. It should be noted that like reference numerals refer to like elements illustrated in one or more of the drawings. In the following description of the present invention, detailed descriptions of known functions and configurations incorporated herein will be omitted for conciseness and clarity.

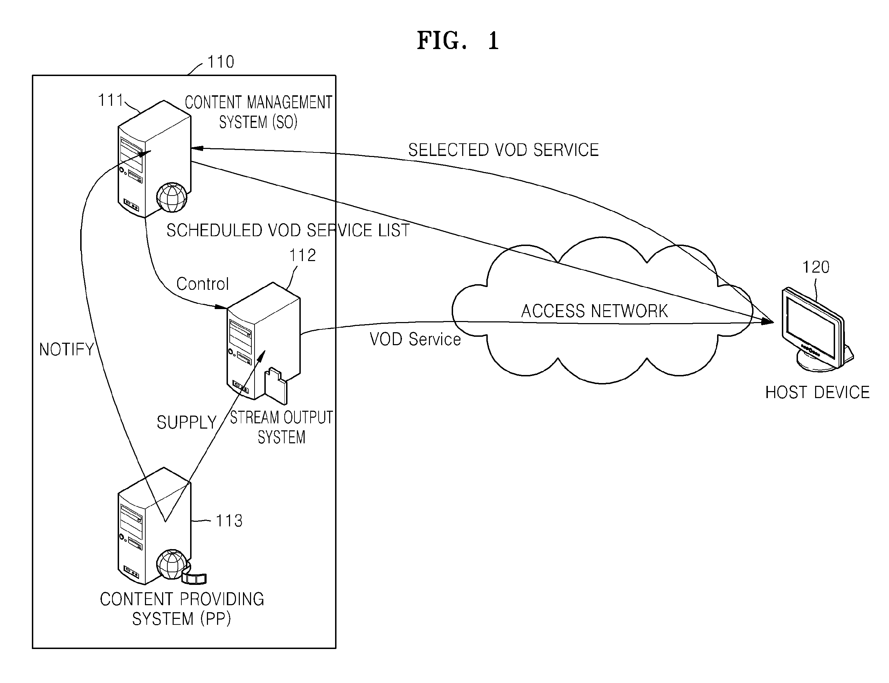

FIG. 1 illustrates an example of a Video On Demand (VOD) system according to an exemplary embodiment of the present invention.

Referring to FIG. 1, the VOD system includes a content server 110 and a host device 120.

The content server 110 and the host device 120 are connected by wired or wireless cables that allow 2-way communication.

The content server 110 and the host device 120 perform 2-way communication over an access network such as an In-Band (IB) type network, a Data-Over-Cable Service Interface Specifications (DOCSIS) Set-top box Gateway (DSG) type network, a DOCSIS type, or an Out of Band (OOB) type network. For example, the content server 110 transmits service information (SI) such as an Electronic Program Guide (EPG), weather, sports, channel information, program information, program names, and broadcasting times to the host device 120 through an OOB channel. The content server 110 provides a video signal compressed by Moving Picture Experts Group (MPEG)-2 and an MPEG audio signal including an audio signal compressed by AC-3 to the host device 120 through an IB channel.

The content server 110 receives a request for a selected VOD service from the host device 120, registers program information of the requested VOD service and identification (ID) information of the host device 120, and then transmits the registered program and stream output notification information to the host device 120. The content server 110 recognizes the state of the host device 120 that reserves recording and then transmits a stream via unicast or multicast methods.

In an exemplary embodiment of the present invention, the content server 110 may include a content management system 111, a stream output system 112, and a content providing system 113. The content providing system 113 provides content to the stream output system 112 and notifies the content management system 111 of a time at which content is provided. The content management system 111 is notified of the time at which content is provided by the content providing system 113, controls the stream output system 112, and transmits a VOD service list, e.g., including released films or re-transmitted programs, to the host device 120 in the form of Extensible Markup Language (XML)-based metadata, section data of an SI, or a file. The stream output system 112 provides a VOD service to the host device 120 according to an output control signal of the content management system 111.

In another exemplary embodiment of the present invention, the content management system 111, the stream output system 112, and the content providing system 113 may be independently provided without being included in the content server 110.

The host device 120 receives a selection of a VOD service from a user, registers the selected VOD service in the content server 110, and records a corresponding program upon detection of stream output notification information regarding the registered VOD service from the content server 110.

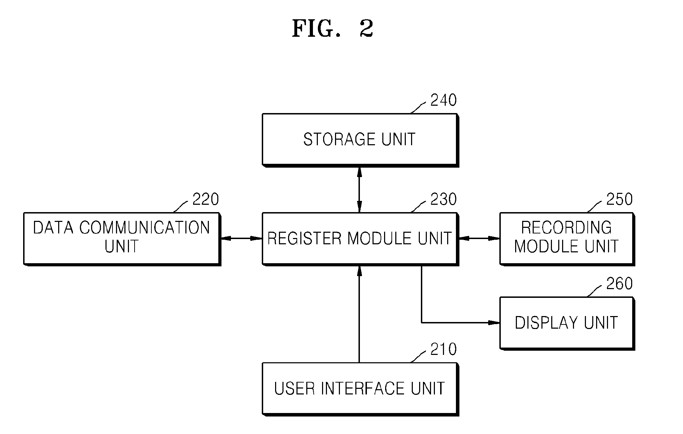

FIG. 2 is a detailed block diagram of the host device 120 illustrated in FIG. 1.

Referring to FIG. 2, the host device 120 includes a user interface unit 210, a data communication unit 220, a register module unit 230, a storage unit 240, a recording module unit 250, and a display unit 260.

The user interface unit 210 receives an input user command.

The recording module unit 250 performs recording of a program according to a recording control command. In an exemplary embodiment of the present invention, the recording module unit 250 includes a Digital Video Recorder (DVR) module and a host recording system.

The register module unit 230 receives a request for recording the program through the user interface unit 210, registers program information of the requested program in the content server 110, and applies the recording control command to the recording module unit 250 upon recognition of a stream output notification signal from the content server 110.

The storage unit 240 stores program data recorded in the recording module unit 250 via the register module unit 230.

The display unit 260 displays various commands and messages controlled by the recording module unit 250.

The data communication unit 220 performs 2-way communication by exchanging the request for the selected VOD service and corresponding program data with the content server 110.

The 2-way communication may employ a channel standard such as In-Band (IB), Data-Over-Cable Service Interface Specifications (DOCSIS) Set-top box Gateway (DSG), DOCSIS, or Out of Band (OOB).

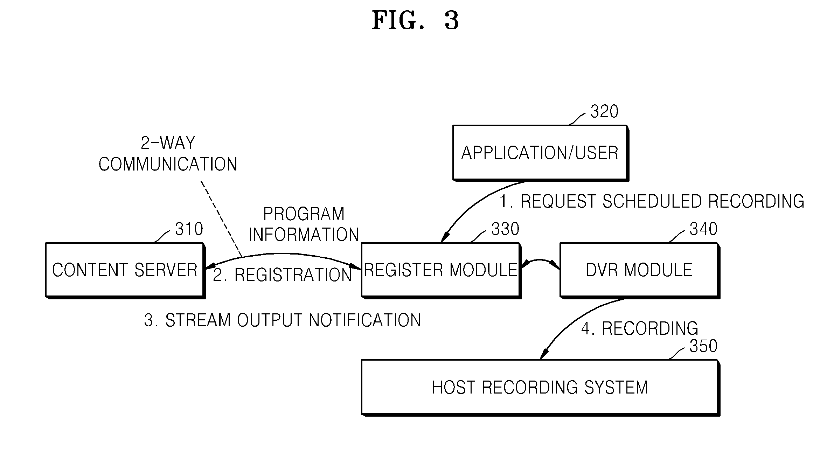

FIG. 3 is an overall conceptual diagram for implementing a method of recording broadcast data and providing content by a content server to a host device according to an exemplary embodiment of the present invention.

Referring to FIG. 3, the overall concept of the exemplary embodiments of the present invention can be divided into the following processes. A DVR module 340 and a host recording system 350 are included in the recording module unit 250 illustrated in FIG. 2.

An application/user 320 of a host device transmits a request for recording a desired program to a register module 330 through a Java Application Program Interface (API). The register module 330 of the host device requests a specific program at the request of the user/application 320. The register module 330 may be provided to an application as a Java interface or provided as a native code.

The register module 330 of the host device registers program information of the requested program in a content server 310 using 2-way communication.

The content server 310 manages the registered program information and information of the host device and sends stream output notification information to the register module 330 when a stream including the program is output.

The register module 330 of the host device recognizes the stream output notification information and gives a recording command to the DVR module 340. Thus, the DVR module 340 of the host device commands the host recording system 350 to record the program.

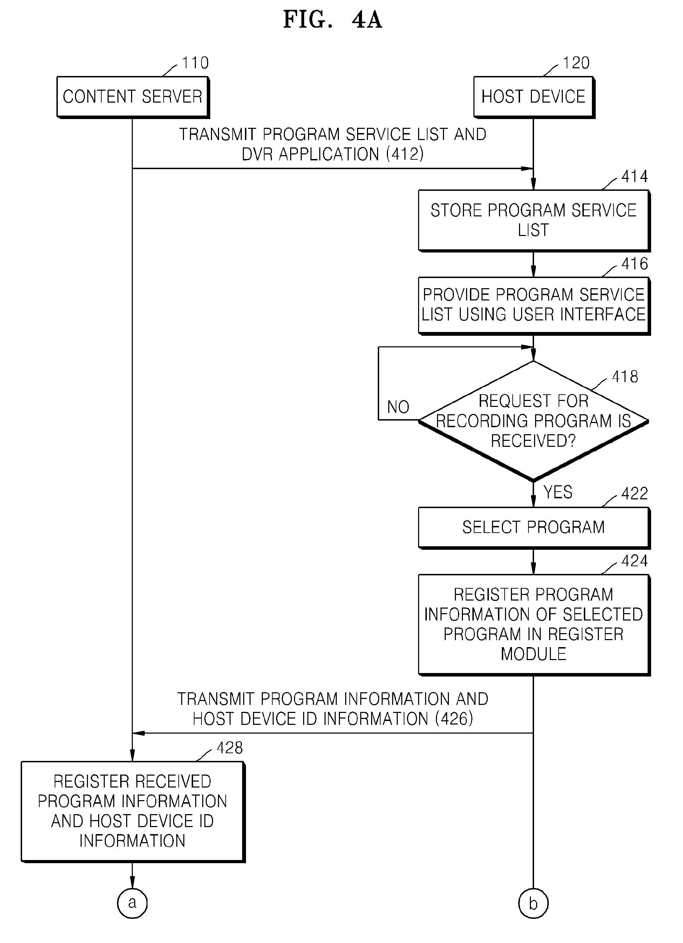

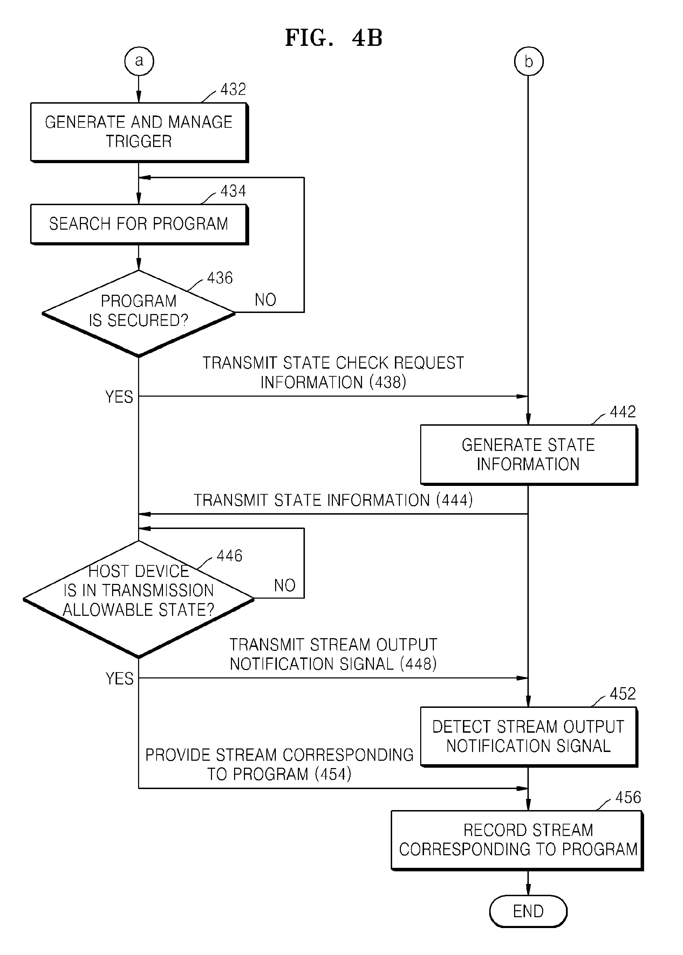

FIGS. 4A and 4B are flowcharts illustrating in detail a method of recording broadcast data and providing content by the content server 110 to the host device 120 according to an exemplary embodiment of the present invention.

In operation 412, the content server 110 transmits a program service list and a DVR application through SI or 2-way communication.

In operation 414, the host device 120 stores the program service list received through 2-way communication. In another exemplary embodiment of the present invention, the host device 120 may have already stored the program service list received through the SI.

In operation 416, the host device 120 provides the program service list to a user using a user interface. The user interface may be a native application, or a data broadcasting application received from the content server 110.

In operation 418, the host device 120 checks if a request for recording a program is received from the user through the user interface.

If so, the host device 120 causes the user to select a desired program in operation 422.

The host device 120 registers program information about the program selected by the user in a register module in operation 424.

The host device 120 transmits the information about the selected program and ID information of the host device 120 to the content server 110 through the register module in operation 426.

In operation 428, the content server 110 registers the program information and the ID information of the host device 120, which are received from the host device 120. The content server 110 may perform a predetermined authentication process using the ID information of the host device 120.

In operation 432, the content server 110 generates and manages a trigger for outputting a stream corresponding to the requested program. The trigger corresponds to stream output notification information.

In operation 434, the content server 110 searches in a database for the program requested by the host device 120.

In operation 436, the content server 110 checks if the program requested by the host device 120 is secured, and if not, the content server 110 continues searching the database. If the requested program is secured, the content server 110 generates and manages a trigger in order to transmit the program to the host device 120 immediately after content corresponding to the program is secured.

In operation 438, the content server 110 transmits a request for state check information of the host device 120 to the host device 120 if the requested program is secured.

The host device 120 generates state information, e.g., including existence of a tuner, a standby operation, or a normal operation, in operation 442 and transmits the state information to the content server 110 in operation 444.

In operation 446, the content server 110 analyzes the state information of the host device 120 in order to check if the host device 120 is in a transmission allowable state.

If the content server 110 determines that the host device 120 is in the transmission allowable state, the content server 110 transmits a stream output notification signal for the program to the host device 120 using a previously generated trigger in operation 448. The stream output notification signal includes output frequency band information and program information of the stream. Thus, the content server 110 transmits the stream output notification signal for the program to the host device 120 regardless of a recording time that is set in the host device 120.

In operation 452, the host device 120 analyzes the stream output notification signal in order to determine the point of time at which the content server 110 outputs a stream corresponding to the program. In another exemplary embodiment of the present invention, the host device 120 may display a stream output notification message on a screen upon detection of the stream output notification information received from the content server 110.

In operation 454, the content server 110 transmits the stream corresponding to the program immediately after transmission of the stream output notification signal.

In operation 456, the host device 120 starts recording the received stream corresponding to the program in synchronization with the point of time at which the stream is output.

Consequently, in the exemplary embodiments of the present invention, the host device 120 remotely registers a desired program to be reserved-recorded in the content server 110 and the content server 110 may perform triggering of the recording.

In another exemplary embodiment of the present invention, when the user performs reserved-recording using an EPG, the host device 120 does not have to proceed with recording if an actual broadcasting time for a desired program is changed for some reason. Instead, the host device 120 proceeds with recording when a stream output notification signal is transmitted from the content server 110, thereby smoothly synchronizing a recording start time with the output time of a stream output notification signal.

As described above, according to the exemplary embodiments of the present invention, by synchronizing a point of time at which a stream is output from the server with a recording start time in the host device, content can be recorded based on an actual output time of the content transmitted from the server, irrespective of a scheduled recording start time set in the host device. Moreover, the server can easily recognize users' demands through registration of content that are not contained in a database of the server and create new business models using various price plans such as pre-payment. Furthermore, the host device can easily recognize a change in a scheduled recording time for desired content and thus accurately record the desired content. The exemplary embodiments of the present invention can be used in data broadcasting standards such as Open Cable Application Platform (OCAP), Advanced Common Application Platform (ACAP), and Multimedia Home Platform (MHP).

The present invention can be embodied as a computer-readable code on a computer-readable recording medium. The computer-readable recording medium is any data storage device that can store data which can be thereafter read by a computer system. Examples of computer-readable recording media include read-only memory (ROM), random-access memory (RAM), CD-ROMs, magnetic tapes, floppy disks, and optical data storage devices. The computer-readable recording medium can also be distributed over a network of coupled computer systems so that the computer-readable code is stored and executed in a decentralized fashion.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of recording broadcast data, the method comprising:
receiving a request (418) for recording a program;
**characterised by**:
registering program information (428) of the program in a content server (110); and
recording the program (456) upon detection of stream output notification information (452) of the program from the content server (110).

2. The method of claim 1, wherein the receiving the request (418) comprises:
receiving a program service list and an application of a recording device (412) from the content server (110); and
receiving the request (418) for the recording of the program based on the program service list and the application of the recording device (412).

3. The method of claim 2, wherein the program service list is at least one of a program list that has already been received using service information and a program list received through 2-way communication.

4. The method of any preceding claim, wherein the program information (428) of the program is transmitted to the content server (110) after the program information (428) is stored in a register module (230, 330).

5. The method of any preceding claim, wherein current state information of a host device (120) is generated and is transmitted to the content server (110) before the recording of the program.

6. The method of any preceding claim, wherein a stream output notification message is displayed on a screen upon detection of the stream output notification information (452) received from the content server (110).

7. A method of providing content by a server (110), the method **characterised by**:
receiving a request (426) for recording a program from a host device (120);
registering program information (428) of the program and identification (ID) information of the host device (120); and
transmitting the program (454) and stream output notification information (448) for the program to the host device (120) if it is confirmed that the program (454) is secured, irrespective of a recording time that is set in the host device (120).

8. The method of claim 7, further comprising transmitting the program information through one of service information (SI) and 2-way communication.

9. The method of claim 7 or claim 8, further comprising registering trigger information (432) for transmitting the program information.

10. The method of any preceding claim, wherein the transmission of the program (454) and the stream output notification information (448) comprises:
searching for the program (434) if the program information is registered and determining if the program is secured (436); and
if it is determined that the program is secured (436), checking a state of the host device (446) and transmitting the program (454) and the stream output notification information (448).

11. The method of any of claims 7 to 9, wherein the transmission of the program (454) and the stream output notification information (448) comprises recognizing a state of the host device (446) and transmitting the program (454) and the stream output notification information (448) via unicast transmission or multicast transmission.

12. An apparatus for recording content, the apparatus comprising:
a user interface unit (210) which receives an input user command; and
a recording module unit (250) which records the content;
**characterised by**:
a register module unit (230) which receives a request (418) for recording a program through the user interface unit (210), registers program information (426) of the program in a server (110), and records through the recording module unit (250) upon recognition of a stream output notification signal (448) from the server (110).

13. The apparatus of claim 12, further comprising a data communication unit (220) which exchanges a transport stream generated by the register module unit (230) with the server (110) through a predetermined data broadcasting channel.

14. The apparatus of claim 12 or claim 13, wherein the stream output notification signal includes output frequency band information and program information of a stream.

15. A computer-readable recording medium having recorded thereon a program for executing a method of recording broadcast data, the method comprising:
receiving a request (418) for recording a program;
**characterised by**:
registering program information (426) of the program (456) in a content server (110); and
recording the program upon detection of stream output notification information (452) of the program from the content server (110).
